# EUROPEAN PATENT SPECIFICATION

(11) **EP 2 381 799 B1**
(45) Date of publication and mention of the grant of the patent: **08.08.2018**
(21) Application number: 10708359.4
(22) Date of filing: 26.01.2010
(51) Int. Cl.: A23L 33/135, A23L 33/12, A23G 1/38

(54) **CHOCOLATE FLAVOURED PROBIOTIC SUPPLEMENT**
PROBIOTISCHES NAHRUNGSERGÄBZUNGSMITTEL MIT SCHOKOLADEGESCHMACK
COMPLEMENT NUTRITIONNEL AROMATISE AU CHOCOLAT

(30) Priority: 27.01.2009 IT RM20090034; 05.10.2009 IT RM20090507
(43) Date of publication of application: 02.11.2011
(73) Proprietor: Probiotical S.p.A., 28100 Novara (NO) (IT)
(72) Inventor: MOGNA, Giovanni, I-28100 Novara (IT); STROZZI, Gian Paolo, I-28100 Novara (IT); MOGNA, Luca, I-28100 Novara (IT)
(74) Representative: Hoffmann Eitle
(86) International application number: PCT/IB2010/000130
(87) International publication number: WO 2010/086705

(56) References cited:
- EP-A- 0 704 164
- EP-A1- 1 344 458
- WO-A-2006/007470
- WO-A-2006/110406
- WO-A-2006/110407
- WO-A-2007/081981
- WO-A-2008/076975
- WO-A1-01/68808
- WO-A1-2005/070221
- FR-A- 1 584 757
- US-A- 4 332 790
- SIUTA-CRUCE P ET AL: "IMPROVING PROBIOTIC SURVIVAL RATES MICROENCAPSULATION PRESERVES THE POTENCY OF PROBIOTIC MICROORGANISMS IN FOOD SYSTEMS" FOOD TECHNOLOGY, INSTITUTE OF FOOD TECHNOLOGISTS, CHICAGO, IL, US, vol. 55, no. 10, 1 October 2001 (2001-10-01), pages 36,38-40,42, XP001108329 ISSN: 0015-6639
- "Nutritiondata: Butter oil, anhydrous" XP2545587 Retrieved from the Internet: URL:http://www.nutritiondata.com/facts/dai ry-and-egg-products/2/2 [retrieved on 2010-07-08]
- "Palm oil" XP2545588 Retrieved from the Internet: URL:http://en.wikipedia.org/wiki/palm_oil [retrieved on 2009-09-14]
- "Cocoa butter" XPxp2545589 Retrieved from the Internet: URL:http://en.wikipedia.org/wiki/cocoa_but ter [retrieved on 2009-09-14]

## Description

The present invention refers to a food product. In particular, the present invention refers to a form of administration of a high and stable load of probiotic bacteria preferentially to persons of paediatric age.

The present invention furthermore refers to a chocolate-flavoured probiotic supplement, in particular to a probiotic tablet comprising an inner part, represented by a core of chocolate containing coated probiotic bacteria and an outer part, represented by an outer coating. In particular, the present invention refers to a form of administration of a high and stable load of probiotic bacteria.

The presence is well-known on the market of chocolate-based or chocolate-flavoured food products with additives of or enriched with probiotic bacteria.

Examples of these food products may be represented by drinks containing chocolate or chocolate-flavoured drinks, chocolate bars, chocolates and biscuits.

WO2007/081981 discloses a probiotic food item containing a beneficial amount of dry active probiotic cultures. The food item also contains a substantial continuous fat-based coating with an effectively low water activity level.

EP01344458 relates to a probiotic delivery system that is preferably added to a food product; in particular relates to compacted pellets that comprise viable micro-organisms and other functional ingredients and a coating may be added to semi-moist, moist or semi-dry products.

US 04332790 describes a microcapsule containing a microorganism coated with a fat which is solid at body temperature.

WO 2005/070221 describes an invention related to a liquid and aqueous food product containing dehydrated lactic bacteria granules and coated with a vegetable fat material.

EP0704164 discloses a composition obtained by mixing fats and/or oils, fermented milk powder and saccharides, heating at 30 DEG C to 50 DEG C to melt the mixture and adding live lactic bacteria.

These food products, however, present some problems.

A first problem relates to the fact that these food products are classified as "products containing probiotic bacteria". Said classification disregards the real bacterial load present in the food product and the maintenance over time of the bacterial load itself inside the product. Furthermore, said classification is independent of the state of vitality of the bacteria. In practice, probiotic bacteria can be present in food products classified as "products containing probiotic bacteria" either in the form of living and vital micro-organisms or in the form of dead micro-organisms. These food products may therefore contain, right from the start, a very modest (living and/or dead) bacterial load which can, in its turn, very rapidly decay further over time until it reaches negligible values, and is inefficacious from a functional and health point of view. However, given the state of the legislation, the aforementioned food products retain their initial classification as "products containing probiotic bacteria".

A second problem relates to the fact that the decay of the bacterial load over time is due to a multiplicity of factors such as, for example, the nature of the food matrix to which the probiotics are added.

The food matrix performs an important role in keeping the bacterial load present within it stable and vital. In fact, within a matrix there are many ingredients with chemical and/or physical characteristics which are very different from each other. Depending on these chemical and/or physical characteristics, it is possible to find, within the matrix, separation or agglomeration between the various ingredients. Furthermore, the water content in the food matrix is very variable and contributes to the decay of the bacterial load.

In foods containing chocolate or chocolate-flavoured foods, it is normal to use cocoa, a basic ingredient for obtaining chocolate, and cocoa butter, a fat extracted from cocoa beans (also known as "cocoa mass").

However, in the preparation of chocolate-based or chocolate-flavoured food products, much use is also made of so-called products "derived" from cocoa and/or cocoa butter. The term "derived" product is intended to mean substitute substances for cocoa and/or cocoa butter which are capable of conferring the aroma or flavour of chocolate. These substances are also called surrogates of cocoa and/or cocoa butter or imitations of cocoa and/or cocoa butter.

For example, in said "derived" products there are lipids which contain saturated and/or unsaturated short-chain or long-chain fatty acids and/or saturated and/or unsaturated short-chain and long-chain esters of fatty acids, for example C6-C18.

In the chocolate-based and chocolate-flavoured food product industry, products "derived" from cocoa and/or cocoa butter can totally or partially replace cocoa, cocoa butter or cocoa mass.

From the account given above, it is evident that food products with additives of, or enriched with, probiotic bacteria are not always capable ensuring a supply of living bacteria in a good state of vitality for the body.

Another problem arises from the fact that the decay over time of the bacterial load is also caused by the interactions which occur between the food matrix, containing the lactic bacteria, and the external storage, conservation and transport conditions of the food product itself. Said external conditions of the food product depend particularly on the temperature, humidity and water content in the external environment in which the food product happens to be. In particular, the interactions between the food matrix and the external storage, conservation and transport conditions of the food product itself affect the stability and decay of the probiotic bacteria contained in said food matrix.

In addition to the aforementioned "products containing probiotic bacteria", the legislation also specifies another category of products entitled "probiotic products" which, unlike "products containing probiotics", are subject to more restrictive rules in terms of bacterial load, which must remain high, vital and stable over time. Probiotic products are products which are evaluated, registered and authorized by the competent offices as being capable of performing a beneficial function for the body.

Probiotic products can be available for sale in the form of many types of merchandise and many pharmaceutical products, such as sachets to be dissolved beforehand in water, capsules, vials, tablets or pastilles. However, the above types have a number of disadvantages.

Preparing and perfecting a probiotic product in solid form, for example as tablets or pastilles, is not easy to achieve. For example, a probiotic product comprising a food matrix, for example a food matrix containing cocoa and/or cocoa butter or derivatives of these and probiotic bacteria, which is in compliance with the requirements of a "probiotic product", is not free of disadvantages.

The tablet and the pastilles represent the commercially most widely used forms and the easiest to use, in that they are easily swallowed and can be taken anywhere and at any time. It should be noted that pharmaceutical technique requires a compression stage in which a force, usually between 10 and 50 kN, is applied to the powdered material. This technological phase, unfortunately, is responsible for a high mortality among the micro-organisms present in the powder, often accompanied by a stress which is capable of negatively affecting the subsequent stability of the probiotic product in the course of its shelf-life.

It follows that the majority of preparations of this type containing probiotics are not in reality capable of exerting beneficial effects on consumers because the percentage of living cells of probiotic micro-organisms is generally very low even immediately after manufacture. Mortality in these products, though variable depending on the strain and the excipients used, can actually exceed 90% of the cells initially present.

Besides the problem of mortality from compression in tablets and pastilles, it should be noted that these types of merchandise and pharmaceutical products, also including pastilles, present a further problem, namely the difficulty of achieving adequate isolation (providing a barrier) of the product with respect to the external environment. The primary packaging of tablets, pastilles and capsules often consists of glass or plastic bottles or vials, not capable of ensuring an adequate barrier against atmospheric moisture. Even blister packs themselves, when they are made up of inadequate materials, or constructed with an insufficient number of layers, cannot sufficiently isolate the products thus packaged.

In particular, it is important to monitor and keep to the minimum level possible the water content already present in a fatty food matrix based on chocolate or chocolate derivatives (cocoa butter, derivatives of cocoa or cocoa butter, imitation cocoa) in which the probiotic bacteria are incorporated. In addition to this, it is equally important to limit all the interactions between said food matrix and the external environment which lead to an increase in the water content of said matrix.

A further disadvantage relates to the fact that usually pills, capsules or pastilles do not always represent a well-accepted form of administration on the part of persons of paediatric age, who generally tend to refuse them because they resemble a medicine.

For this reason, there remains the necessity of having available a "probiotic product" with a high level of convenience in use and particularly acceptable to consumers, which has a bacterial load that is high, vital and stable over time.

In particular, there remains the necessity of having available a food/supplement having probiotic activity, intended for persons of paediatric age, in a physical form that is easy to use and administer, pleasant and acceptable.

It furthermore becomes necessary to have available a food product or supplement containing probiotic bacteria, which is capable of keeping the bacterial load contained in it high, vital and stable over time.

The Applicant has responded to the aforementioned needs by proposing a probiotic food product or supplement which is really functional, particularly indicated for paediatric use, in a form of administration which is easy to consume, transport and store, and capable of keeping the bacterial load contained in it high, vital and stable over time.

The subject of the present invention consists of a food product or supplement having the characteristics stated in the attached independent claim.

The composition comprises a food matrix and probiotic micro-organisms.

Said food matrix comprises products "derived" from cocoa and/or from cocoa butter.

In the context of the present invention the term "derived" products of cocoa and/or cocoa butter is intended to mean products derived from cocoa and/or cocoa butter, or substitute products for cocoa and/or cocoa butter, or products which confer the aroma and/or flavour of chocolate, or surrogates of cocoa and/or cocoa butter or imitations of cocoa and/or cocoa butter.

Preferred embodiments of the present invention are set forth in the detailed description which follows, in exemplary form and therefore not limiting the range of the present invention. The subject of the invention is defined in the claims. Table 1 lists a group of micro-organisms which have valid application in the context of the present invention.

Table 2 refers to various types of matrices L1, L2, L3 and L4 and to the values for mortality in percent as a function of time.

Table 3 refers to types of supplements A, B, C and D.

Table 4 refers to the data for the stability of supplements A, B, C and D.

Tables 5 and 6 refer to experimental tests aimed at determining the decay of the bacterial load as a function of time.

A preferred embodiment is represented by comfits, dragees or drops of various forms, chocolate-based or chocolate-flavoured, to which the probiotic bacteria are added.

In one of the embodiments of the present invention, the comfit or dragee is represented by a core of chocolate (with milk and/or fondant) and/or imitation - chocolate. In particular, in the case of the comfit, the chocolate core is coated in a suitable material on which to confer the so-called "confectionizing", a technique known to experts in the field.

The technique requires the probiotics to be incorporated into the chocolate which has been tempered in chemico-physical conditions absolutely compatible with the probiotic micro-organisms, especially in relation to temperature, pH, redox potential and moisture. In this way the probiotics are not damaged by the production process and are further protected in the subsequent storage phase.

The procedure for coating probiotic micro-organisms in chocolate and/or imitation chocolate is known to experts in the field. However, the Applicant has found that the presence of at least one fatty acid or one ester of fatty acid from among those with 8, 10 and 12 carbon atoms (C8, C10 and C12) is extremely toxic for the probiotic bacteria used in association with "derived" products of cocoa and/or cocoa butter.

Imitation chocolate containing at least one of said fatty acids and/or their esters causes mortality among the probiotics, often even in excess of 1 log, by simple contact with the cells.

The necessity therefore emerges, in the event that said surrogates/imitations of cocoa and/or cocoa butter are used in place of cocoa butter, for a preliminary check on the biocompatibility of said matrices with the specific probiotic component chosen.

Probiotic micro-organisms are live bacteria capable of producing a beneficial effect on the consumer when ingested in sufficient quantities and for a sufficient time.

The probiotics used in the manufacture of products in accordance with the present invention are chosen from the group comprising the following species: L. acidophilus, L. crispatus, L. gasseri, L. delbrueckii group, L. salivarius, L. casei, L. paracasei, L. plantarum group, L. rhamnosus, L. reuteri, L. brevis, L. buchneri, L. fermentum, B. adolescentis, B. angulatum, B. bifidum, B. breve, B. catenulatum, B. infantis, B. lactis, B. longum, B. pseudocatenulatum, S. thermophilus.

In a preferred embodiment of the invention, the probiotic component contains from one to six strains, preferably from one to three strains chosen from among the probiotic species mentioned above.

Table 1 shows, by way of example, a group of micro-organisms which have valid application in the context of the present invention.

All the strains have been deposited in accordance with the Treaty of Budapest and are accessible to the public on request from the competent Depositing Authority.

The above species are present in a quantity of between 0.1% and 10% by weight, preferably between 0.5% and 5% by weight; even more preferably between 1% and 3% by weight, compared with the total weight of the composition.

In a preferred embodiment, the supplement which is the subject of the invention comprises from one to six strains, preferably from one to three strains chosen from those mentioned above in Table 1.

The food matrix can comprise derived products of cocoa and/or cocoa butter and can also comprise other ingredients such as for example preservatives, sweeteners and soya lecithin in a quantity of between 1% and 5%, preferably between 1% and 3% by weight, compared with the total weight of the composition. The food matrix can also comprise some fibres.

The food matrix can contain:
a) "derivatives" of cocoa and/or of cocoa butter, and/or
b) "derivatives" of cocoa and/or of cocoa butter in association with cocoa, cocoa butter or cocoa mass, and/or
c) cocoa, cocoa butter or cocoa mass.

At all events, the matrix must be substantially free of fatty acids C8, C10, and C12 and/or free of esters of fatty acids C8, C10, and C12.

The food matrix is present in a quantity of between 50% and 99.9% by weight, preferably between 70% and 99.9% by weight, compared with the total weight of the composition.

The total quantity of fatty acids C8 or C10 or C12 and/or of esters of fatty acids C8 or C10 or C12 is less than 10% by weight, compared with the total weight of the food matrix. The fatty acids C8, C10, C12 and/or their esters are caprilic acid, capric acid and lauric acid.

Preferably, the total quantity of fatty acids C8, C10 and C12 and/or of esters of fatty acids C8, C10 and C12 is less than 5% by weight of the total weight of the food matrix. Advantageously, said quantity by weight is comprised of 0.1% to 3% by weight, compared with the total weight of the food matrix.

"Esters of fatty acids C8, C10, C12" include mono-, di- and tri-glycerids. The matrix must be substantially free of mono-, di- and tri-glycerids containing fatty acids C8, C10, C12.

Furthermore, in the case of triglycerids (also known as triacylglycerols) which are neutral esters of glycerol and are made up of a molecule of glycerol linked to three fatty acids, the three fatty acids can be all different, all the same or only two the same. In this case, too, the triglycerids must be substantially free of fatty acids C8, C10, and C12.

The derivatives of cocoa and/or cocoa butter can also be chosen from among:
- a) fats of non-lauric origin. Said fats are of vegetable origin, preferably in refined form. Advantageously, such fats contain at least one fatty acid chosen from among: palmitic acid, stearic acid, palmitoleic acid, oleic acid, linoleic acid, linolenic acid, arachidonic acid or their suitable mixtures comprising from two to seven fatty acids in variable proportions to each other. A particularly preferred fat was revealed to be one chosen from the group comprising illipe butter, karite butter, mango kernel fat, shorea fat, kokum butter, palm oil and their derivatives.

The derivative or imitation of cocoa and/or cocoa butter can also be chosen from among:
- b) soya proteins, proteins of cereal origin, rice proteins, egg proteins, whey proteins, milk proteins, maize proteins, cellulose, dextrin, rubbers, fibres, pea fibres, inulin, maltodextrin, polydextrose, polyols, starches, modified starches, esters of fatty acids and emulsifiers.

Said derivatives or imitations of cocoa and/or cocoa butter, as stated in points a) and b), can be used in association with other derivatives or imitations. Advantageously, said derivatives or imitations a) and b) are used in association with cocoa, cocoa butter or cocoa mass, or in association with "derived" products of cocoa and/or cocoa butter as defined above.

In any event, said derivatives or imitations of cocoa and/or cocoa butter, as stated in points a) and b), and said "derived" products of cocoa and/or cocoa butter as described above cannot contain one or more of said fatty acids C8 or C10 or C12 and/or of esters of fatty acids C8 or C10 or C12 in a quantity greater than 10% by weight, preferably greater than 5% by weight; advantageously in a quantity of between 0.1% and 3% by weight, compared with the total weight of the food matrix.

The composition can also comprise prebiotic fibres and carbohydrates with bifidogenic action such as for example inulin, fructo-oligosaccharides (FOS), galacto- and transgalacto-oligosaccharides (GOS and TOS), gluco-oligosaccharides (GOSα), xylo-oligosaccharides (XOS), chitosan-oligosaccharides (COS), soya-oligosaccharides (SOS), isomalto-oligosaccharides (IMOS), resistant starch, pectin, psyllium, arabino-galactanes, gluco-mannanes, galacto-mannanes, xylanes, lactosaccharose, lactulose, lactitol and various other types of rubbers, acacia fibre, carruba fibre, oat fibre, bamboo fibre, fibres from citruses and, in general, fibres containing a soluble portion and an insoluble portion, in variable ratios to each other.

In a preferred embodiment of the invention, the composition comprises at least one prebiotic fibre chosen from among those mentioned above and/or suitable mixtures between them in any relative percentage.

The quantity of prebiotic fibres and/or of carbohydrates with bifidogenic action, if present, is between 0.5% and 29.9% by weight, preferably between 1% and 15% and even more preferably between 2% and 10%, compared with the total weight of the composition. In this case there is a supplement with symbiotic activity.

Furthermore, the food composition can also comprise other active ingredients and/or components such as vitamins, minerals, bioactive peptides, substances with anti-oxidizing action, hypocholesterolaemic agent, hypoglycaemic agent, anti-inflammatory and anti-sweetening agents in a quantity generally between 0.001% and 10% by weight, preferably between 0.5% and 5% by weight, always depending on the type of active component and its recommended daily dose if any, compared with the total weight of the composition.

The supplement of the present invention can be prepared in the following manner.

Initially, a chocolate-flavoured paste is prepared comprising cocoa and/or cocoa butter and/or derived products of cocoa and/or cocoa butter. Said paste is homogenized in a tank of suitable capacity and processed in operating conditions known to the expert in the field. The processing requires a stage in which the paste is tempered at a temperature generally between 28°C and 36°C according to the ordinary techniqes well-known to the expert in the field and using known devices and machinery. Once the paste is tempered it is maintained in the liquid/melted state and the probiotic bacteria and any other ingredients are added until a uniform mass is obtained. Advantageously, after the addition of the probiotics and/or the other active components, there is a stage of mixing with a suitable stirrer for the time necessary to obtain a homogeneous distribution of said probiotics and/or other active components. The liquid paste containing the probiotic bacteria and/or other active components is poured onto two rotating rollers containing various half-housings in lenticular form whose walls are kept at a temperature, for example, of less than 15°C. The paste in contact with the walls of the container is rapidly solidified and assumes a lenticular solid shape (a small flattened spheroidal comfit), dependent in any event on the shape of the housings in each roller.

Preferably, after the manufacture of the chocolate cores, they are required to be kept at a refrigerated temperature, for example 4°C, for a time usually of between 6 and 36 hours, so as to allow for the complete crystallization of the chocolate.

Subsequently, a stage can be provided of coating the outer surface of the lenticular comfit thus obtained, preferably in a coating pan, with a glaze containing at least one substance chosen from the group comprising: maltodextrin, shellac, cellulose acetophthalate, zein, talc, calcium carbonate, kaolin, sugar, syrup solutions, gum arabic and/or other carbohydrates, carnauba wax or other waxes. At this stage it is possible, furthermore, to add one or more opacifying and/or colouring substances. The confectionizing stage generally comprises several stages which require the specific and sequential use of one or more of the substances listed above, in accordance with techniques known to experts in the field.

In a preferred embodiment, the paste is made up of cocoa and cocoa butter in percentages known to experts in the field. In relation to the fatty acids, the composition of the cocoa butter can be summarized as follows: palmitic acid (24.4%-26.2%), stearic acid (34.4%-35.4%), oleic acid (37.7%-38.1%) and linoleic acid (approx. 2.1%).

In another embodiment of the present invention, the probiotic bacteria can be utilized in micro-encapsulated form, i.e. coated with a composition containing at least one lipid, preferably of vegetable origin. The micro-encapsulated bacteria are then added to the matrix. Alternatively, the matrix can comprise both micro-encapsulated and non-micro-encapsulated bacteria.

The Applicant has tested different lipid substances, often used in the preparation of "derived" products of cocoa and/or cocoa butter such as products derived from cocoa and/or cocoa butter, substitute products for cocoa and/or cocoa butter, products which confer the aroma and/or flavour of chocolate, surrogates of cocoa and/or cocoa butter or imitations of cocoa and/or cocoa butter. In particular, the Applicant has tested the following lipid substances available on sale (L1, L2, L3 and L4) having a quali-quantitative composition of fatty acids as stated in Table 2.

A sample of 1.709 mg of each product L1-L4 was heated in an oven at 46°C until a liquid sample was obtained. Subsequently, the sample was taken to 37°C and had added to it 291 mg of a lyophilized culture of the probiotic micro-organism Lactobacillus paracasei LMG P-21380 giving rise to samples with a weight equal to 2.000 mg, each containing 2.5x109 CFUs of probiotic bacteria. The probiotic bacteria were homogenized within the sample by mixing until a homogeneous sample was obtained, which was immediately poured into suitable moulds and cooled in a refrigerator to +5°C to allow it to solidify rapidly. A microbiological count of the bacteria and calculation of the percentage mortality was carried out on each sample at Time Zero (T0) before putting the sample into the refrigerator, and then at 2 months after the introduction of the sample into the refrigerator (T2) and at 4 months (T4) and 12 months (T12): see Table 2.

Table 2 shows that lipid substances L3 and L4 did not show a toxic effect on the probiotic bacteria present in the samples. Maintenance of the bacterial load is high even after 12 months and the bacteria were maintained in a condition of good vitality.

Besides the test of biocompatibility with the LMG P-21380 strain of L. paracasei, numerous further tests were conducted with other probiotic species and with other lipid matrices at different compositions of fatty acids. All these tests highlighted that probiotics are compatible only with fatty substances that have a quantity of fatty acids or esters of fatty acids C8-C10-C12 below 10%, advantageously below 5% by weight, compared with the total weight of the food matrix. The quantity of fatty acids and/or esters of fatty acids C8 is between 3% and 5%, advantageously below 3% by weight, compared with the total weight of the food matrix. The quantity of fatty acids and/or esters of fatty acids C10 is between 3% and 5%, advantageously below 3% by weight, compared with the total weight of the food matrix. The quantity of fatty acids and/or esters of fatty acids C12 is below 1% by weight, compared with the total weight of the food matrix.

The Applicant has therefore demonstrated that any imitations of cocoa and/or cocoa butter suitable for the preparation of chocolate-flavoured probiotic food supplements can contain a maximum of 10% total of fatty acids and/or triglycerids with 8, 10 or 12 atoms of carbon.

On the basis of the results relating to the biocompatibility of lipid matrices, chocolate-flavoured food supplements were made consisting of comfits based on cocoa and cocoa butter, or of suitable imitations of cocoa and/or cocoa butter, containing probiotic strains in quantities deducible from Table 3.

Table 3 shows that in comfits A, B, C and D the food matrix is represented by cocoa and cocoa mass, in combination with an imitation, in the ratio of 60% by weight, compared with the total weight of the composition, and by a substance represented by cocoa butter and an imitation, present in the ratio of 20% compared with the total weight. Advantageously, sugars were added in percentages on average between 5% and 20% (in this case 12%) and, in the case of comfits A and D, soya lecithin in the ratio of 2%. The remaining part is made up of additives, preservatives and other substances.

The probiotic strains used in all the comfits are represented by a mixture of Lactobacillus paracasei LMG P-21380, Bifidobacterium breve DSM 16604 and Lactobacillus rhamnosus DSM 16605, used in the ratio of 1:1:1 vital cells to each other. The overall concentration of the probiotic strains per gram of the food matrix tested in the biocompatibility and stability trials was 5 billion CFU/g in all the cases and in any event such as to render a confectionizing unit probiotic.

After fabrication, the concentration of probiotic cells in the supplements mentioned above was determined, and then they were conserved at +25°C for up to 2 years for evaluation of the rate of decay of the total probiotic load (expressed in millions of CFU/g) after 3, 6, 12 and 24 months.

Table 4 shows the stability data collected.

From Table 4 we note that comfits C and D, fabricated in accordance with the present invention, showed a stability at least overlapping, if not slightly better than, comfit A, consisting of chocolate and representing the state of the art. Comfit B, which also forms part of the state of the art and is an example of a chocolate-flavoured product containing an imitation of cocoa butter, showed a stability markedly inferior to the other two in that the presence of said imitation significantly accelerated the kinetics of decay of the probiotic strains during conservation of the product. It should be emphasized, furthermore, that there was a considerable reduction in the probiotic load in comfit B immediately after fabrication, thus demonstrating that there is a problem of acute toxicity of the food matrix towards the probiotic strains.

In a preferred embodiment, the supplement comprises a food matrix containing a quantity by weight of stearic acid and palmitic acid greater than 80%, compared with the weight of the matrix, in association with a quantity of fatty acids and/or esters of fatty acids C8-C10-C12 lower than 10%, compared with the total weight of the food matrix.

Advantageously, the supplement comprises a food matrix containing a quantity by weight of stearic acid and palmitic acid greater than 90%, compared with the weight of the matrix, in association with a quantity of fatty acids and/or esters of fatty acids C8-C10-C12 lower than 5% by weight, compared with the total weight of the food matrix.

The Applicant has thus demonstrated that it is possible to make chocolate-flavoured probiotic comfits, using imitations of cocoa and/or cocoa butter which are fully compatible with the micro-organisms with probiotic value, and capable of conferring on them adequate stability at a temperature of +25°C.

Examples of alternative forms of the present invention are set forth below, by way of examples and therefore with nonlimiting effect: bars of various weights, on average between 20 and 250 grams, bars with soft centres, chocolates, chocolates with liquid or semisolid centres, mousse, eggs, pralines, drops, dragees, balls, discs, cores of various shapes and weights. Said shapes, especially pralines, drops, dragees, balls, discs and cores of various shapes and weights can undergo at least one confectionizing stage, in accordance with the description given above and knowledge of the state of the art.

The products which are the subject of the present invention can therefore claim to be considered "probiotic products" which, considering the organoleptic characteristics particularly appreciated by children, and the fact that they are easily swallowed, can represent the ideal carrier for any probiotic micro-organism.

Furthermore, the Applicant has perfected a food product or supplement comprising an inner part and an outer part.

The inner part (food matrix) comprises cocoa and/or cocoa butter and/or derived products of cocoa and/or cocoa butter.

Said inner part furthermore comprises probiotic bacteria which are coated or covered with a lipid composition.

Advantageously, the probiotic bacteria contained in said inner part are only bacteria coated or covered with a lipid composition.

The lipid composition comprises at least one lipid, and said at least one lipid is of vegetable origin.

Advantageously, said lipids of vegetable origin are chosen from the group comprising saturated fats.

Advantageously, saturated fats are used having a melting point lower than 75°C, preferably between 45°C and 65°C.

In a preferred embodiment, said saturated fats are chosen from the group comprising the mono- and di-glycerids of saturated fatty acids, polyglycerols esterified with saturated fatty acids, and free saturated fatty acids. Preferably, said saturated fats are chosen from among polyglyceryl distearate, glyceryl palmitostearate and the hydrogenated vegetable fats of non-lauric origin.

As is well-known to experts in the field of fats and lipid matrices, lipid compositions can contain a distribution in weight of several lipids. The case can therefore not be excluded in which a particular lipid composition, used in the present invention, can contain one lipid in preponderant quantity and one or more lipids in minority quantities.

The Applicant has established that the inner part, represented by a food matrix of a fatty nature, which comprises cocoa and/or cocoa butter and/or derived products of cocoa and/or cocoa butter, performs an important role in keeping stable and vital the bacterial load which it contains.

In particular, it is the water content present in the inner part (food matrix of a fatty nature) which contributes to the decay or the stability of the bacterial load.

In its turn, the water content present in the inner part (food matrix of a fatty nature) can vary, depending on the interaction with the outside.

In the case of a food product comprising an inner part (food matrix of a fatty nature) containing probiotic bacteria which are not coated ("naked" probiotic bacteria), the Applicant has established that the formation of an outer part of a covering or coating layer on said inner part contributes to the decay over time of the bacterial load contained in said inner part.

In practice, we are witnessing a migration of all or at least a portion of the water content present in the outer part, represented by a covering or coating layer, towards the inner part, represented by a food matrix of a fatty nature which, as is well-known, has a chemical and physical nature which is not hydrophilous.

The migration of the water content from said outer part towards said inner part contributes to increasing the total water content present in the inner part where the lactic bacteria are to be found. The larger water content contributes to the decay and the reduction in stability over time of the bacterial load.

In the context of the present invention the term "derived" products of cocoa and/or cocoa butter is intended to mean products derived from cocoa and/or cocoa butter, or substitute products for cocoa and/or cocoa butter, or products which confer the aroma and/or flavour of chocolate, or surrogates of cocoa and/or cocoa butter or imitations of cocoa and/or cocoa butter. Even chocolate, insofar as it fits this description, is considered in the context of the present invention.

In a preferred embodiment of the present invention, the food product or supplement is in the form of coated tablets (also called comfits or dragees). The inner part, represented by a food matrix of a fatty nature, is also called the "core" or "nucleus".

The outer part is represented by a covering or coating layer.

In other embodiments of the present invention the food product can be in the form of a praline, filled chocolate, or smarties.

Alternatively, yet other solid forms of administration are envisaged, for example in a capsule, tablet or pastille, prepared using methods where the compression of the materials is performed at pressures such as not to cause mortality of the bacteria.

All the forms of administration mentioned above are easy to confectionize, consume, transport and store.

The inner part of the comfit or dragee can, for example, be represented by a core of cocoa and/or cocoa butter and/or derived products of cocoa and/or cocoa butter, for example milk and/or fondant chocolate.

Advantageously, the probiotic bacteria contained in said inner part are only bacteria coated or covered with a lipid composition, as stated above.

A material is applied onto the inner part of the comfit or dragee which is capable of forming a layer of coating or covering. Said layer of coating or covering represents the outer part.

The outer part coats or covers at least a portion of said inner part or, alternatively, the outer part coats or covers said inner part completely.

The inner part and the outer part can be in direct contact with each other or, alternatively, the inner part and the outer part can be separated from each other by at least one further layer of separation.

In a preferred embodiment, said at least one layer of separation comprises a substance chosen from the group comprising carnauba wax, beeswax, shellac, vegetable stearin, paraffin, magnesium stearate, stearic acid or suitable mixtures between them.

In particular, said at least one layer of separation represents between 2% and 20% by weight, compared with the weight of the inner part, or core.

In a preferred embodiment of the invention, said at least one layer of separation constitutes between 3% and 10% by weight, compared with the weight of the inner part; preferably between 4% and 7% by weight.

The layer of separation is applied using methods and apparatus known to experts in the field.

In the case of coated tablets (also known as comfits or dragees) the coating or covering (outer part) is also known to experts in the field as "confectionizing".

The confectionizing is performed using techniques and devices known to experts in the field.

In a preferred embodiment, the confectionizing (outer part) is performed by applying an aqueous solution comprising: maltodextrin, shellac, cellulose acetophthalate, starch, zein, talc, calcium carbonate, titanium dioxide, kaolin, sugar, syrup solutions, saccharose, sweeteners, gum arabic and/or other carbohydrates, carnauba wax or other waxes. At this stage of confectionizing it is possible, furthermore, to add one or more opacifying and/or colouring substances.

The confectionizing stage generally comprises several stages which require the specific and sequential use of one or more of the substances listed above, in accordance with techniques known to experts in the field.

In another preferred embodiment, said outer part furthermore comprises a food fibre, preferably long-chain, chosen from the group comprising: inulin, resistant starch, pectin, psyllium, arabinogalactanes, glucomannanes, galactomannanes, xylanes, acacia fibre, carruba fibre, oat fibre, bamboo fibre, fibres from citruses and, in general, fibres containing a soluble portion and an insoluble portion, in variable ratios to each other.

Advantageously, said fibre is chosen from the group comprising inulin and citrus fibres, preferably in a ratio by weight ranging from 1:3 to 3:1.

The micro-organisms are live probiotic bacteria capable of producing a beneficial effect on the consumer when ingested in sufficient quantities and for a sufficient time.

The bacteria used in the manufacture of the food product or supplement in accordance with the present invention are chosen from the group comprising the following species:
L. acidophilus, L. crispatus, L. gasseri, L. delbrueckii group, L. salivarius, L. casei, L. paracasei, L. plantarum group, L. rhamnosus, L. reuteri, L. brevis, L. buchneri, L. fermentum, B. adolescentis, B. angulatum, B. bifidum, B. breve, B. catenulatum, B. infantis, B. lactis, B. longum, B. pseudocatenulatum, S. thermophilus.

In a preferred embodiment of the invention, the food product comprises from one to six strains, preferably from one to three strains chosen from among the probiotic species mentioned above.

Table 1 shows, by way of example, a group of micro-organisms which have valid application in the context of the present invention.

The above species are present in a quantity of between 0.1% and 10% by weight, preferably between 0.5% and 5% by weight; even more preferably between 1% and 3% by weight, compared with the total weight of the composition.

In a preferred embodiment, the food product or supplement which is the subject of the invention comprises from one to six strains, preferably from one to three strains chosen from those mentioned in Table 1.

The inner part of the food product or supplement which comprises cocoa and/or cocoa butter and/or derived products of cocoa and/or cocoa butter can also comprise other ingredients such as for example preservatives, sweeteners, soya lecithin, flavourings, colourings in a quantity by weight generally between 0.1% to 10% by weight, preferably between 0.5% and 5% and even more preferably between 1% and 3%, compared with the total weight of the composition.

The inner part of the food product can contain "derivatives" of cocoa and/or cocoa butter or, alternatively, can contain said derivatives in association also with cocoa, cocoa butter or cocoa mass.

The inner part of the food product is present in a quantity of between 25% and 90% by weight, preferably between 35% and 75% by weight, compared with the total weight of the food product; preferably between 45% and 60% by weight.

In a preferred embodiment of the present invention, the inner part, represented by a food matrix, must be substantially free of fatty acids C8, C10, and C12 and/or of esters of fatty acids C8, C10, and C12.

Advantageously, the total quantity of fatty acids C8 or C10 or C12 and/or of esters of fatty acids C8 or C10 or C12 is less than 10% by weight, compared with the total weight of the inner part. The fatty acids C8, C10, C12 and/or their esters are caprilic acid, capric acid and lauric acid.

Preferably, the total quantity of fatty acids C8, C10 and C12 and/or of esters of fatty acids C8, C10 and C12 is less than 5% by weight, compared with the total weight of the inner part. Advantageously, said quantity by weight is comprised of between 0.1% and 3% by weight, compared with the total weight of the inner part.

"Esters of fatty acids C8, C10, C12" include mono-, di- and tri-glycerids. The matrix must be substantially free of mono-, di- and tri-glycerids containing fatty acids C8, C10, C12.

Furthermore, in the case of triglycerids (also known as triacylglycerols) which are neutral esters of glycerol and are made up of a molecule of glycerol linked to three fatty acids, the three fatty acids can be all different, all the same or only two the same. In this case, too, the triglycerids must be substantially free of fatty acids C8, C10, and C12.

The derivatives of cocoa and/or cocoa butter can also be chosen from among:
- a) fats of non-lauric origin. Said fats are of vegetable origin, preferably in refined form.

Advantageously, such fats contain at least one fatty acid chosen from among: palmitic acid, stearic acid, palmitoleic acid, oleic acid, linoleic acid, linolenic acid, arachidonic acid or their suitable mixtures comprising between two and seven fatty acids in variable proportions to each other. A particularly preferred fat was revealed to be one chosen from the group comprising illipe butter, karite butter, mango kernel fat, shorea fat, kokum butter, palm oil and their derivatives.

The derivative or imitation of cocoa and/or cocoa butter can also be chosen from among:
- b) soya proteins, proteins of cereal origin, rice proteins, egg proteins, whey proteins, milk proteins, maize proteins, cellulose, dextrin, rubbers, fibres, pea fibres, inulin, maltodextrin, polydextrose, polyols, starches, modified starches, esters of fatty acids and emulsifiers.

Said derivatives or imitations of cocoa and/or cocoa butter, as stated in points a) and b), can be used in association with other derivatives or imitations.

Advantageously, said derivatives or imitations a) and b) are used in association with cocoa, cocoa butter or cocoa mass, or in association with "derived" products of cocoa and/or cocoa butter as defined above.

In any event, said derivatives or imitations of cocoa and/or cocoa butter, as stated in points a) and b), and said "derived" products of cocoa and/or cocoa butter as described above cannot contain one or more of said fatty acids C8 or C10 or C12 and/or esters of fatty acids C8 or C10 or C12 in a quantity greater than 10% by weight, preferably greater than 5% by weight; advantageously in a quantity of between 0.1% and 3% by weight, compared with the total weight of the food matrix.

In a preferred embodiment, the inner part of the food product can also comprise prebiotic fibres and carbohydrates with bifidogenic action such as for example inulin, fructo-oligosaccharides (FOS), galacto- and transgalacto-oligosaccharides (GOS and TOS), gluco-oligosaccharides (GOSα), xylo-oligosaccharides (XOS), chitosan-oligosaccharides (COS), soya-oligosaccharides (SOS), isomalto-oligosaccharides (IMOS), resistant starch, pectin, psyllium, arabino-galactanes, gluco-mannanes, galacto-mannanes, xylanes, lactosaccharose, lactulose, lactitol and various other types of rubbers, acacia fibre, carruba fibre, oat fibre, bamboo fibre, fibres from citruses and, in general, fibres containing a soluble portion and an insoluble portion, in variable ratios to each other.

In a preferred embodiment of the invention, the inner part of the food product comprises at least one prebiotic fibre chosen from among those mentioned above and/or suitable mixtures between.them in any relative percentage.

The quantity of prebiotic fibres and/or of carbohydrates with bifidogenic action, if present in the inner part of the food product, is between 0.5% and 29.9% by weight, preferably between 1% and 15% and even more preferably between 2% and 10%, compared with the total weight of the food product. In this case the food product or supplement has symbiotic activity.

Furthermore, the inner part of the food product or supplement can also comprise other active ingredients and/or components such as vitamins, minerals, bioactive peptides, substances with anti-oxidizing action, hypocholesterolaemic agent, hypoglycaemic agent, anti-inflammatory and anti-sweetening agents in a quantity generally between 0.001% and 20% by weight, preferably between 0.01% and 5% by weight, always depending on the type of active component and its recommended daily dose if any, compared with the total weight of the composition.

The food product or probiotic supplement which is the subject of the present invention can be prepared by the following method.

Initially, a chocolate-flavoured paste is prepared comprising cocoa and/or cocoa butter and/or products derived from cocoa and/or cocoa butter.

Said paste is homogenized in a tank of suitable capacity and processed in operating conditions known to the expert in the field.

The processing requires a stage in which the paste is tempered at a temperature generally between 28°C and 36°C according to the ordinary techniqes well-known to the expert in the field and using known devices and machinery.

Once the paste is tempered it is maintained in the liquid/melted state and the probiotic bacteria and any other ingredients are added until a uniform mass is obtained. The probiotic bacteria have been previously coated with a lipid composition.

Advantageously, the probiotic bacteria have been coated with a lipid composition using the technique of micro-encapsulation. Advantageously, after the addition of the probiotics and/or the other active components there is a stage of mixing with a suitable stirrer for the time necessary to obtain a homogeneous distribution of said probiotics and/or other active components.

The liquid paste containing the coated probiotic bacteria and/or other active components is poured onto two rotating rollers containing various half-housings in lenticular form whose walls are kept at a temperature, for example, of less than 15°C. The paste in contact with the walls of the container is rapidly solidified and assumes a solid form:
for example a lenticular form like that of a small flattened spheroidal egg. The solid form obtained depends on the form of the housings present in each roller. This solid form obtained represents the inner part (food matrix of a fatty nature) of the food product. The inner part is also called the "core" or "nucleus".

Preferably, after the fabrication of the inner parts (the chocolate cores in the form of drops or balls), they are required to be kept at a refrigerated temperature, for example 4°C, for a time usually of between 6 and 36 hours, so as to allow for the complete crystallization of the chocolate.

Subsequently, a stage is provided of coating or covering (confectionizing), preferably in a coating pan, said inner parts obtained as above, to form the outer part of the final food product.

The outer part is formed by means of a coating, for example by confectionizing, which requires the use of an aqueous solution comprising maltodextrin, shellac, cellulose acetophthalate, starch, zein, talc, calcium carbonate, titanium dioxide, kaolin, sugar, syrup solutions, saccharose, sweeteners, gum arabic and/or other carbohydrates, carnauba wax or other waxes.

Preferably, at this stage of coating it is possible, furthermore, to add one or more opacifying and/or colouring substances. The confectionizing stage generally comprises several stages which require the specific and sequential use of one or more of the substances listed above, in accordance with techniques known to experts in the field.

In a preferred embodiment, the confectionizing can include the use of at least one food fibre to form said outer part. The food fibre, preferably long-chain, is chosen from the group comprising: inulin, resistant starch, pectin, psyllium, arabinogalactanes, glucomannanes, galactomannanes, xylanes, acacia fibre, carruba fibre, oat fibre, bamboo fibre, fibres from citruses and, in general, fibres containing a soluble portion and an insoluble portion, in variable ratios to each other.

Advantageously, said fibre is chosen from the group comprising inulin and citrus fibres; preferably it is a mixture in a ratio by weight ranging from 1:3 to 3:1.

In a particularly preferred embodiment, the inner part of the food product which is the subject of the invention is separated from the outer part (confectionizing) by at least one further layer of separation.

Said at least one layer of separation comprises a substance chosen from the group comprising carnauba wax, beeswax, shellac, vegetable stearin, paraffin, magnesium stearate, stearic acid or suitable mixtures between them.

Said layer is applied according to techniques known to experts in the field, preferably in a coating pan.

In particular, it can be applied using the substance(s) listed above in solid form, by successive additions to the cores or dragees (inner part of the food product), kept stirred in a coating pan at room temperature. Alternatively, said substances which form the separation layer can be melted at a temperature 5-10°C higher than their melting point, and subsequently applied in liquid form, even if highly viscous, to the cores or dragees which are being kept stirred, until a uniform layer is formed.

In a preferred embodiment, the paste is made up of cocoa and cocoa butter in percentages known to experts in the field. In relation to the fatty acids, the composition of the cocoa butter can be summarized as follows: palmitic acid (24.4%-26.2%), stearic acid (34.4%-35.4%), oleic acid (37.7%-38.1%) and linoleic acid (approx. 2.1%).

In an embodiment of the present invention, the coated probiotic bacteria are in micro-encapsulated form, i.e. coated with a composition containing at least one lipid, preferably of vegetable origin. The micro-encapsulated bacteria are then added to the matrix.

The bacteria, preferably in micro-encapsulated form, can be micro-encapsulated using the ordinary techniques known to the experts in the field. For example, a fluid bed technique can be used (for example, top-spray or bottom-spray), in which coating materials of a lipid nature are used.

In a preferred embodiment, saturated vegetable fats are used, having a melting point below 75°C, preferably between 45°C and 65°C.

In a preferred embodiment, saturated vegetable fats can be used having a certain degree of hydrophilicity, which can be chosen from among the mono- and di-glycerids of saturated fatty acids, the esterified polyglycerols with saturated fatty acids and the free saturated fatty acids.

For example, it is possible to use polyglyceryl distearate (commercial name Plurol Stearique WL 1009), glyceryl palmitostearate (commercial name Precirol Ato 5), saturated fatty acids (commercial name Revel C) or hydrogenated vegetable fats of non-lauric origin.

In a preferred embodiment, the ratio by weight between lyophilized micro-organisms and the lipid coating material which coats it is 50:50 or 40:60.

In a first embodiment, the bacteria are mono-coated.

In practice, a single coating with a single lipid is carried out. Advantageously, the single coating is based on polyglyceryl distearate (commercial name Plurol Stearique WL 1009).

The mono-coated bacteria are incorporated into the inner part, which is subsequently coated (confectionized) to form the food product of the present invention having an inner part and an outer part. Preferably, the inner part can comprise a food fibre. Preferably, the inner part and the outer part can be separated from each other by at least one separating layer. Preferably, the outer part comprises a food fibre.

In a second embodiment, the bacteria are double-coated. In practice, a double coating is carried out, in succession, with two lipids different from each other.

The double-coated bacteria are incorporated into the inner part, which is subsequently coated (confectionized) to form the food product of the present invention having an inner part and an outer part.

Preferably, the inner part can comprise a food fibre.

Preferably, the inner part and the outer part can be separated from each other by at least one separating layer. Preferably, the outer part comprises a food fibre.

Advantageously, the two lipids are chosen between a hydrogenated palm fat (Tm=60°C) and a glycerol dipalmitostearate (Tm=57-60°C); they are sprayed onto the lyophilate in succession, i.e. a double covering is applied to the lyophilate: the first with the hydrogenated palm fat (for example with Revel C) and the second with the glycerol dipalmitostearate (for example Precirol Ato 5) in a ratio by weight of 3:1 to each other, advantageously 2:1, for example 2/3 by weight of the first and 1/3 by weight of the second.

A double coating of the cells ensures better sealing of the bacteria from the environment, producing a continuous film without pores communicating with the outside. This wrapper, however, must open at intestinal level to release the bacteria and allow them to colonize. The lipids chosen are in fact resistant to acid pH, so that the coating remains intact in the stomach, but sensitive to even slightly basic pH, so as to allow the formation of holes in the coating during its passage through the intestine.

The Applicant has thus demonstrated that it is possible to make chocolate-flavoured probiotic comfits, comprising bacteria mono-coated or double-coated with a lipid composition compatible with bacteria of probiotic value and capable of giving them adequate stability at a temperature of +25°C.

The products which are the subject of the present invention can therefore claim to be considered "probiotic products" which, considering the organoleptic characteristics particularly appreciated by children and their ease of swallowing, can represent the ideal carrier for any probiotic micro-organism.

**TABLE 1**

| **No.** | **Name** | **Filing number** | **Filing date** | **Depositor** |
|---|---|---|---|---|
| 1 | *Streptococcus thermophilus B39* | LMG P-18383 | 5.05.1998 | PROBIOTICAL S.p.A. |
| 2 | *Streptococcus thermophilus T003* | LMG P-18384 | 5.05.1998 | PROBIOTICAL S.p.A. |
| 3 | *Lactobacillus pentosus 9*/*1 ei* | LMG P-21019 | 16.10.2001 | MOFIN S.R.L. |
| 4 | *Lactobacillus plantarum 776*/*1 bi* | LMG P-21020 | 16.10.2001 | MOFIN S.R.L. |
| 5 | *Lactobacillus plantarum 476LL 20 bi* | LMG P-21021 | 16.10.2001 | MOFIN S.R.L. |
| 6 | *Lactobacillus plantarum PR ci* | LMG P-21022 | 16.10.2001 | MOFIN S.R.L. |
| 7 | *Lactobacillus plantarum 776*/*2 hi* | LMG P-21023 | 16.10.2001 | MOFIN S.R.L. |
| 8 | *Lactobacillus casei ssp. paracasei 181A*/*3 aiai* | LMG P-21380 | 31.01.2002 | PROBIOTICAL S.p.A. |
| 9 | *Lactobacillus belonging to the acidophilus group 192A*/*1 aiai* | LMG P-21381 | 31.01.2002 | PROBIOTICAL S.p.A. |
| 10 | *Bifidobacterium longum 175A*/*1 aiai* | LMG P-21382 | 31.01.2002 | PROBIOTICAL S.p.A. |
| 11 | *Bifidobacterium breve 195A*/*1 aici* | LMGP-21383 | 31.01.2002 | PROBIOTICAL S.p.A. |
| 12 | *Bifidobacterium lactis 32A*/*3 aiai* | LMG P-21384 | 31.01.2002 | PROBIOTICAL S.p.A. |
| 13 | *Lactobacillus plantarum 501*/*2 gi* | LMG P-21385 | 31.01.2002 | MOFIN S.R.L. |
| 14 | *Lactococcus lactis ssp. lactis 501*/*4 hi* | LMG P-21387 | 15.03.2002 | MOFIN S.R.L. |
| 15 | *Lactococcus lactis ssp. lactis 501*/*4 ci* | LMG P-21388 | 31.01.2002 | MOFIN S.R.L. |
| 16 | *Lactobacillus plantarum 501*/*4 li* | LMG P-21389 | 15.03.2002 | MOFIN S.R.L. |
| 17 | *Streptococcus thermophilus GB1* | DSM 16506 | 18.06.2004 | PROBIOTICAL S.P.A. |
| 18 | *Streptococcus thermophilus GB5* | DSM 16507 | 18.06.2004 | PROBIOTICAL S.P.A. |
| 19 | *Bifidobacterium longum BL 03* | DSM 16603 | 20.07.2004 | PROBIOTICAL S.P.A. |
| 20 | *Bifidobacterium breve BR 03* | DSM 16604 | 20.07.2004 | PROBIOTICAL S.P.A. |
| 21 | *Lactobacillus casei ssp. rhamnosus LR 04* | DSM 16605 | 20.07.2004 | PROBIOTICAL S.P.A. |
| 22 | *Lactobacillus delbrueckii ssp. bulgaricus LDB 01* | DSM 16606 | 20.07.2004 | PROBIOTICAL S.P.A. |
| 23 | *Lactobacillus delbrueckii ssp. bulgaricus LDB 02* | DSM 16607 | 20.07.2004 | PROBIOTICAL S.P.A. |
| 24 | *Streptococcus thermophilus Y02* | DSM 16590 | 20.07.2004 | PROBIOTICAL S.P.A. |
| 25 | *Streptococcus thermophilus Y03* | DSM 16591 | 20.07.2004 | PROBIOTICAL S.P.A. |
| 26 | *Streptococcus thermophilus Y04* | DSM 16592 | 20.07.2004 | PROBIOTICAL S.P.A. |
| 27 | *Streptococcus thermophilus Y05* | DSM 16593 | 20.07.2004 | PROBIOTICAL S.P.A. |
| 28 | *Bifidobacterium adolescentis BA 03* | DSM 16594 | 21.07.2004 | PROBIOTICAL S.P.A. |
| 29 | *Bifidobacterium adolescentis BA 04* | DSM 16595 | 21.07.2004 | PROBIOTICAL S.P.A. |
| 30 | *Bifidobacterium breve BR 04* | DSM 16596 | 21.07.2004 | PROBIOTICAL S.P.A. |
| 31 | *Bifidobacterium pseudocatenulatum BP 01* | DSM 16597 | 21.07.2004 | PROBIOTICAL S.P.A. |
| 32 | *Bifidobacterium pseudocatenulatum BP 02* | DSM 16598 | 21.07.2004 | PROBIOTICAL S.P.A. |
| 33 | *Staphylococcus xylosus SX 01* | DSM 17102 | 01.02.2005 | PROBIOTICAL S.P.A. |
| 34 | *Bifidobacterium adolescentis BA 02* | DSM 17103 | 01.02.2005 | PROBIOTICAL S.P.A. |
| 35 | *Lactobacillus plantarum LP 07* | DSM 17104 | 01.02.2005 | PROBIOTICAL S.P.A. |
| 36 | *Streptococcus thermophilus YO8* | DSM 17843 | 21.12.2005 | PROBIOTICAL S.P.A. |
| 37 | *Streptococcus thermophilus YO9* | DSM 17844 | 21.12.2005 | PROBIOTICAL S.P.A. |
| 38 | *Streptococcus thermophilus YO100* | DSM 17845 | 21.12.2005 | PROBIOTICAL S.P.A. |
| 39 | *Lactobacillus fermentum LF06* | DSM 18295 | 24.05.2006 | PROBIOTICAL S.P.A. |
| 40 | *Lactobacillus fermentum LF07* | DSM 18296 | 24.05.2006 | PROBIOTICAL S.P.A. |
| 41 | *Lactobacillus fermentum LF08* | DSM 18297 | 24.05.2006 | PROBIOTICAL S.P.A. |
| 42 | *Lactobacillus fermentum LF09* | DSM 18298 | 24.05.2006 | PROBIOTICAL S.P.A. |
| 43 | *Lactobacillus gasseri LGS01* | DSM 18299 | 24.05.2006 | PROBIOTICAL S.P.A. |
| 44 | *Lactobacillus gasseri LGS02* | DSM 18300 | 24.05.2006 | PROBIOTICAL S.P.A. |
| 45 | *Lactobacillus gasseri LGS03* | DSM 18301 | 24.05.2006 | PROBIOTICAL S.P.A. |
| 46 | *Lactobacillus gasseri LGS04* | DSM 18302 | 24.05.2006 | PROBIOTICAL S.P.A. |
| 47 | *Bifidobacterium adolescentis EI-3* | DSM 18350 | 15.06.2006 | PROBIOTICAL S.P.A. |
| 48 | *Bifidobacterium adolescentis EI-15* | DSM 18351 | 15.06.2006 | PROBIOTICAL S.P.A. |
| 49 | *Bifidobacterium adolescentis EI-18* | DSM 18352 | 15.06.2006 | PROBIOTICAL S.P.A. |
| 50 | *Bifidobacterium catenulatum EI-20* | DSM 18353 | 15.06.2006 | PROBIOTICAL S.P.A. |
| 51 | *Streptococcus thermophilus FRai* | DSM 18613 | 13.09.2006 | MOFIN S.R.L. |
| 52 | *Streptococcus thermophilus LB2bi* | DSM 18614 | 13.09.2006 | MOFIN S.R.L. |
| 53 | *Streptococcus thermophilus LRci* | DSM 18615 | 13.09.2006 | MOFIN S.R.L. |
| 54 | *Streptococcus thermophilus FP4* | DSM 18616 | 13.09.2006 | MOFIN S.R.L. |
| 55 | *Streptococcus thermophilus ZZ5F8* | DSM 18617 | 13.09.2006 | MOFIN S.R.L. |
| 56 | *Streptococcus thermophilus TEO4* | DSM 18618 | 13.09.2006 | MOFIN S.R.L. |
| 57 | *Streptococcus thermophilus S1ci* | DSM 18619 | 13.09.2006 | MOFIN S.R.L. |
| 58 | *Streptococcus thermophilus 641bi* | DSM 18620 | 13.09.2006 | MOFIN S.R.L. |
| 59 | *Streptococcus thermophilus 277A*/*1ai* | DSM 18621 | 13.09.2006 | MOFIN S.R.L. |
| 60 | *Streptococcus thermophilus 277A*/*2ai* | DSM 18622 | 13.09.2006 | MOFIN S.R.L. |
| 61 | *Streptococcus thermophilus IDC11* | DSM 18623 | 13.09.2006 | MOFIN S.R.L. |
| 62 | *Streptococcus thermophilus ML3di* | DSM 18624 | 13.09.2006 | MOFIN S.R.L. |
| 63 | *Streptococcus thermophilus TEO3* | DSM 18625 | 13.09.2006 | MOFIN S.R.L. |
| 64 | *Streptococcus thermophilus G62* | DSM 19057 | 21.02.2007 | MOFIN S.R.L. |
| 65 | *Streptococcus thermophilus G1192* | DSM 19058 | 21.02.2007 | MOFIN S.R.L. |
| 66 | *Streptococcus thermophilus GB18* | DSM 19059 | 21.02.2007 | MOFIN S.R.L. |
| 67 | *Streptococcus thermophilus CCR21* | DSM 19060 | 21.02.2007 | MOFIN S.R.L. |
| 68 | *Streptococcus thermophilus G92* | DSM 19061 | 21.02.2007 | MOFIN S.R.L. |
| 69 | *Streptococcus thermophilus G69* | DSM 19062 | 21.02.2007 | MOFIN S.R.L. |
| 70 | *Streptococcus thermophilus YO 10* | DSM 19063 | 21.02.2007 | PROBIOTICAL S.P.A. |
| 71 | *Streptococcus thermophilus YO 11* | DSM 19064 | 21.02.2007 | PROBIOTICAL S.P.A. |
| 72 | *Streptococcus thermophilus YO 12* | DSM 19065 | 21.02.2007 | PROBIOTICAL S.P.A. |
| 73 | *Streptococcus thermophilus YO 13* | DSM 19066 | 21.02.2007 | PROBIOTICAL S.P.A. |
| 74 | *Weissella ssp. WSP 01* | DSM 19067 | 21.02.2007 | PROBIOTICAL S.P.A. |
| 75 | *Weissella ssp. WSP 02* | DSM 19068 | 21.02.2007 | PROBIOTICAL S.P.A. |
| 76 | *Weissella ssp. WSP 03* | DSM 19069 | 21.02.2007 | PROBIOTICAL S.P.A. |
| 77 | *Lactobacillus plantarum LP 09* | DSM 19070 | 21.02.2007 | PROBIOTICAL S.P.A. |
| 78 | *Lactococcus lactis NS 01* | DSM 19072 | 21.02.2007 | PROBIOTICAL S.P.A. |
| 79 | *Lactobacillus plantarum LP 10* | DSM 19071 | 21.02.2007 | PROBIOTICAL S.P.A. |
| 80 | *Lactobacillus fermentum LF 10* | DSM 19187 | 20.03.2007 | PROBIOTICAL S.P.A. |
| 81 | *Lactobacillus fermentum LF 11* | DSM 19188 | 20.03.2007 | PROBIOTICAL S.P.A. |
| 82 | *Lactobacillus casei ssp. rhamnosus LR 05* | DSM 19739 | 27.09.2007 | PROBIOTICAL S.P.A. |
| 83 | *Bifidobacterium bifidum BB01* | DSM 19818 | 30.10.2007 | PROBIOTICAL S.P.A. |
| 84 | *Lactobacillus delbrueckii LD 01* | DSM 19948 | 28.11.2007 | PROBIOTICAL S.P.A. |
| 85 | *Lactobacillus delbrueckii LD 02* | DSM 19949 | 28.11.2007 | PROBIOTICAL S.P.A. |
| 86 | *Lactobacillus delbrueckii LD 03* | DSM 19950 | 28.11.2007 | PROBIOTICAL S.P.A. |
| 87 | *Lactobacillus delbrueckii LD 04* | DSM 19951 | 28.11.2007 | PROBIOTICAL S.P.A. |
| 88 | *Lactobacillus delbrueckii LD 05* | DSM 19952 | 28.11.2007 | PROBIOTICAL S.P.A. |
| 89 | *Bifidobacterium pseudocatenulatum* B660 | DSM 21444 | 13.05.2008 | PROBIOTICAL S.P.A. |
| 90 | *Lactobacillus acidophilus LA 02* | DSM 21717 | 06.08.2008 | PROBIOTICAL S.P.A. |
| 91 | *Lactobacillus paracasei LPC 08* | DSM 21718 | 06.08.2008 | PROBIOTICAL S.P.A. |
| 92 | *Lactobacillus pentosus LPS 01* | DSM 21980 | 14.11.2008 | PROBIOTICAL S.P.A. |
| 93 | *Lactobacillus rhamnosus LR 06* | DSM 21981 | 14.11.2008 | PROBIOTICAL S.P.A. |
| 94 | *Lactobacillus salivarius* LS01 | DSM 22775 | 23.07.2009 | PROBIOTICAL S.P.A. |
| 95 | *Lactobacillus salivarius* LS06 | DSM 22776 | 23.07.2009 | PROBIOTICAL S.P.A. |
| 96 | *Bifidobacterium bifidum* BB01 | DSM 22892 | 28.08.2009 | PROBIOTICAL S.P.A. |
| 97 | *Bifidobacterium bifidum* | DSM 22893 | 28.08.2009 | PROBIOTICAL S.P.A. |
| 98 | *Bifidobacterium bifidum* BB03 | DSM 22894 | 28.08.2009 | PROBIOTICAL S.P.A. |

**TABLE 2**

| Fatty acids | L1 | L2 | L3 | L4 |
|---|---|---|---|---|
| Caprilic Acid C8:0 | 50-80% | 10-15% | 3-5% | <3% |
| Capric Acid C10:0 | 20-50% | 7-10% | 3-5% | <3% |
| Lauric Acid C12:0 | <1% | 30-50% | <1% | <1% |
| Myristic Acid C14:0 | <1% | 5-25% | <1% | <1% |
| Palmitic Acid C16:0 | <1% | 4-25% | 40-50% | 42-50% |
| Stearic Acid C18:0 | <1% | 5-35% | 48-58% | 50-60% |

| Mortality % | | | | |
|---|---|---|---|---|
| T0 (time zero) | 70% | 65% | 6% | 3% |
| T2 (2 months) | 85% | 80% | 8% | 5% |
| T4 (4 months) | 96% | 92% | 11% | 7% |
| T12 (12 months) | 99% | 98% | 20% | 18% |

**TABLE 3**

| Type of supplement | | Food matrix | | Probiotic strain | Load in million CFU/g |
|---|---|---|---|---|---|
| Comfit A | State of the art | Cocoa | Cocoa butter | Mix of 3 strains | 5,000 |
| Comfit B | State of the art | Cocoa | Imitation of lauric origin | Mix of 3 strains | 5,000 |
| Comfit C | Subject of invention | Cocoa Pea fibre | Imitation of non-lauric origin | Mix of 3 strains | 5,000 |
| Comfit D | Subject of invention | Cocoa | Imitation of non-lauric origin | Mix of 3 strains | 5,000 |

**TABLE 4**

| Type of supplement | Load expected at Time Zero | Load found at Time Zero | Load found after 3 months at +25°C | Load found after 6 months at +25°C | Load found after 12 months at +25°C | Load found after 24 months at +25°C |
|---|---|---|---|---|---|---|
| Comfit A | 5,000 | 4,700 | 3,912 | 3,256 | 2,233 | 1,061 |
| Comfit B | 5,000 | 750 | 283 | 107 | 14 | 0.28 |
| Comfit C | 5,000 | 4,900 | 4,140 | 3,497 | 2,473 | 1,248 |
| Comfit D | 5,000 | 4,950 | 4,267 | 3,571 | 2,475 | 1,201 |

**TABLE 5**

| **Food product with uncoated probiotic bacteria ("naked" probiotic bacteria)** | **Decay of bacterial load at 25°C** | | | | | | | | | | |
|---|---|---|---|---|---|---|---|---|---|---|---|
| | **T0** | **30 days** | | **80 days** | | **120 days** | | **160 days** | | **249 days** | |
| | MLD/g real load | MLD/g | t1/2 | MLD/g | t1/2 | MLD/g | t1/2 | MLD/g | t1/2 | MLD/g | t1/2 |
| Inner part (core) not coated (without outer part) | .6.8 | 6.5 | 461 | 5.3 | 233.6 | 4.6 | 212.8 | 4.2 | 230.2 | 3.9 | 310.5 |
| Inner part (core) coated, with an outer part | 5.1 | 4.9 | 347 | 3.6 | 159.2 | 3.15 | 172.6 | 2.31 | 140.0 | 0.03 | 33.6 |

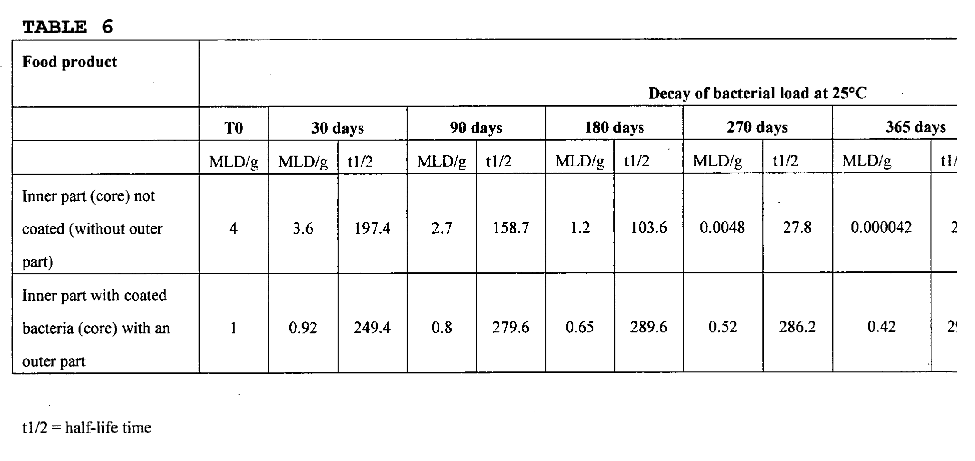

## Claims

1. A food product comprising a food matrix based on cocoa butter substitute,
wherein said food matrix comprises probiotic bacteria coated with a lipid composition comprising at least one lipid of vegetable origin chosen from among the saturated fats having a melting point below 75°C,
and **characterized in that** the quantity of C8 fatty acids and/or esters of fatty acids is between 3% and 5%, compared with the total weight of the food matrix; the quantity of C10 fatty acids and/or esters of fatty acids is between 3% and 5%, compared with the total weight of the food matrix; and the quantity of C12 fatty acids and/or esters of fatty acids is lower than 1%, compared with the total weight of the food matrix.

2. A food product comprising a food matrix based on cocoa butter substitute,
wherein said food matrix comprises probiotic bacteria coated with a lipid composition comprising at least one lipid of vegetable origin chosen from among the saturated fats having a melting point below 75°C,
and **characterized in that** the quantity of C8 fatty acids and/or esters of fatty acids is below 3% by weight, compared with the total weight of the food matrix; the quantity of C10 fatty acids and/or esters of fatty acids is below 3% by weight, compared with the total weight of the food matrix; and the quantity of C12 fatty acids and/or esters of fatty acids is lower than 1%, compared with the total weight of the food matrix.

3. The food product according to claim 1 or claim 2, wherein said saturated fats are chosen from the group comprising the mono- and di-glycerids of saturated fatty acids, the esterified polyglycerols with saturated fatty acids and the free saturated fatty acids; preferably, said saturated fats are chosen from among polyglyceryl distearate, glyceryl palmitostearate and the hydrogenated vegetable fats of non-lauric origin; preferably said saturated fats have a melting point between 45°C and 65°C.

4. The food product according to claim 2, wherein said food matrix comprises less than 5% by weight; preferably in a quantity between 0.1% and 3% by weight of fatty acid C8, C10, and C12 and/or esters thereof.

5. The food product according to any of the preceding claims 1-4, wherein said fatty acid C8, C10, and C12 is chosen from among Caprilic acid, Capric acid and Lauric acid and said ester of a C8, C10, C12 fatty acid comprises mono-, di- or tri-glycerids.

6. The food product according to any of the preceding claims 1-5, wherein the food matrix can also comprise at least one prebiotic fibre chosen from the group comprising: inulin, fructo-oligosaccharides (FOS), galacto- and transgalacto-oligosaccharides (GOS and TOS), gluco-oligosaccharides (GOSα), xylo-oligosaccharides (XOS), chitosan-oligosaccharides (COS), soya-oligosaccharides (SOS), isomalto-oligosaccharides (IMOS), resistant starch, pectin, psyllium, arabino-galactanes, gluco-mannanes, galacto-mannanes, xylanes, lactosaccharose, lactulose, lactitol and various other types of rubbers, acacia fibre, carruba fibre, oat fibre, bamboo fibre, fibres from citruses and fibres containing a soluble portion and an insoluble portion, in variable ratios to each other.

7. The food product according to any of the preceding claims 1-6, wherein said food matrix is coated by means of an outer coating, preferably said coating is created by confectionizing which requires the use of an aqueous solution comprising maltodextrin, shellac, cellulose acetophthalate, starch, zein, talc, calcium carbonate, titanium dioxide, kaolin, sugar, syrup solutions, saccharose, sweeteners, gum arabic and/or other carbohydrates, carnauba wax or other waxes.

8. The food product according to any one of claims 1-7, wherein the food matrix comprises a quantity by weight of stearic acid and palmitic acid greater than 80%, compared with the weight of the matrix.

9. A method for the preparation of a food product according to any one of claims 1-8 comprising at least the following stages:
- adding the probiotic bacteria coated with a lipid composition comprising at least one lipid of vegetable origin chosen from among the saturated fats having a melting point below 75°C, to a food matrix based on melted cocoa butter substitute,
- pouring said food matrix into a housing having the walls at a lower temperature than the temperature of said food matrix based on melted cocoa butter substitute, to obtain the solidification of the latter.

10. Use of probiotic bacteria coated with a lipid composition comprising at least one lipid of vegetable origin chosen from among the saturated fats having a melting point below 75°C for the preparation of a food product according to any one of claims 1 to 8.

## Patentansprüche

1. Nahrungsmittelprodukt, umfassend eine auf Kakaobutterersatz basierende Nahrungsmittelmatrix,
wobei die Nahrungsmittelmatrix probiotische Bakterien enthält, die mit einer Lipidzusammensetzung überzogen sind, welche mindestens ein Lipid pflanzlichen Ursprungs enthält, das aus gesättigten Fetten mit einem unter 75°C liegenden Schmelzpunkt ausgewählt wird,
und **gekennzeichnet dadurch, dass** die Menge an C8-Fettsäuren und/oder Fettsäureestern im Vergleich zum Gesamtgewicht der Nahrungsmittelmatrix zwischen 3% und 5% liegt; die Menge an C10-Fettsäuren und/oder Fettsäureestern im Vergleich zum Gesamtgewicht der Nahrungsmittelmatrix zwischen 3% und 5% liegt; und die Menge an C12-Fettsäuren und/oder Fettsäureestern im Vergleich zum Gesamtgewicht der Nahrungsmittelmatrix unter 1% liegt.

2. Nahrungsmittelprodukt, umfassend eine auf Kakaobutterersatz basierende Nahrungsmittelmatrix,
wobei die Nahrungsmittelmatrix probiotische Bakterien enthält, die mit einer Lipidzusammensetzung überzogen sind, welche mindestens ein Lipid pflanzlichen Ursprungs enthält, das aus den gesättigten Fetten mit einem unter 75°C liegenden Schmelzpunkt ausgewählt wird,
und **gekennzeichnet dadurch, dass** die Menge an C8-Fettsäuren und/oder Fettsäureestern im Vergleich zum Gesamtgewicht der Nahrungsmittelmatrix unter 3 Gewichtsprozent liegt; die Menge an C10-Fettsäuren und/oder Fettsäureestern im Vergleich zum Gesamtgewicht der Nahrungsmittelmatrix unter 3 Gewichtsprozent liegt; und die Menge an C12-Fettsäuren und/oder Fettsäureestern im Vergleich zum Gesamtgewicht der Nahrungsmittelmatrix unter 1% liegt.

3. Nahrungsmittelprodukt nach Anspruch 1 oder Anspruch 2, wobei die gesättigten Fette aus der Gruppe umfassend Mono- und Diglyceride gesättigter Fettsäuren, mit gesättigten Fettsäuren veresterte Polyglycerine und freie gesättigte Fettsäuren ausgewählt werden; wobei die gesättigten Fette vorzugsweise aus Polyglyceryldistearat, Glycerylpalmitostearat und gehärteten pflanzlichen Fetten ausgewählt werden, die sich nicht von der Laurinsäure ableiten; und wobei die gesättigten Fette vorzugsweise einen zwischen 45°C und 65°C liegenden Schmelzpunkt haben.

4. Nahrungsmittelprodukt nach Anspruch 2, wobei die Nahrungsmittelmatrix weniger als 5 Gewichtsprozent, vorzugsweise eine Menge zwischen 0,1 und 3 Gewichtsprozent, an C8-, C10- und C12-Fettsäuren und/oder deren Estern enthält.

5. Nahrungsmittelprodukt nach einem der vorhergehenden Ansprüche 1 bis 4, wobei die C8-, C10- und C12-Fettsäure aus Caprylsäure, Caprinsäure und Laurinsäure ausgewählt wird und der C8-, C10-, C12-Fettsäureester Mono-, Di- oder Triglyceride enthält.

6. Nahrungsmittelprodukt nach einem der vorhergehenden Ansprüche 1 bis 5, wobei die Nahrungsmittelmatrix auch mindestens eine präbiotische Faser enthalten kann, ausgewählt aus der Gruppe umfassend: Inulin, Fructooligosaccharide (FOS), Galacto- und Transgalactooligosaccharide (GOS und TOS), Glucooligosaccharide (GOSα), Xylooligosaccharide (XOS), Chitosanoligosaccharide (COS), Soja-Oligosaccharide (SOS), Isomaltooligosaccharide (IMOS), resistente Stärke, Pektin, Psyllium, Arabinogalactane, Glucomannane, Galactomannane, Xylane, Lactosaccharose, Lactulose, Lactit und verschiedene andere Arten von Gummen, Akazienfaser, Johannisbrotfaser, Haferfaser, Bambusfaser, Fasern von Zitrusfrüchten und Fasern, die in unterschiedlichen Verhältnissen zueinander einen löslichen und einen nichtlöslichen Anteil enthalten.

7. Nahrungsmittelprodukt nach einem der vorhergehenden Ansprüche 1 bis 6, wobei die Nahrungsmittelmatrix mit einer äußeren Schicht überzogen ist, wobei die Schicht vorzugsweise durch Konfektionierung generiert wird, die die Verwendung einer wässrigen Lösung enthaltend Maltodextrin, Schellack, Cellulose-Acetophthalat, Stärke, Zein, Talk, Calciumcarbonat, Titandioxid, Kaolin, Zucker, Siruplösungen, Saccharose, Süßungsmittel, Gummiarabikum und/oder andere Kohlenhydrate, Carnaubawachs oder andere Wachse erfordert.

8. Nahrungsmittelprodukt nach einem der Ansprüche 1 bis 7, wobei die Nahrungsmittelmatrix eine Gewichtsmenge an Stearinsäure und Palmitinsäure von mehr als 80% im Vergleich zum Gewicht der Matrix aufweist.

9. Verfahren zur Herstellung eines Nahrungsmittelprodukts nach einem der Ansprüche 1 bis 8, umfassend mindestens die folgenden Schritte:
- Zugabe von probiotischen Bakterien, die mit einer Lipidzusammensetzung überzogen sind, welche mindestens ein Lipid pflanzlichen Ursprungs enthält, das aus gesättigten Fetten mit einem unter 75°C liegenden Schmelzpunkt ausgewählt wird, zu einer auf einem geschmolzenen Kakaobutterersatz basierenden Nahrungsmittelmatrix,
- Gießen der Nahrungsmittelmatrix in ein Gehäuse, dessen Wände eine niedrigere Temperatur als die Temperatur der auf einem geschmolzenen Kakaobutterersatz basierenden Nahrungsmittelmatrix haben, um letztere zu verfestigen.

10. Verwendung probiotischer Bakterien, die mit einer Lipidzusammensetzung überzogen sind, welche mindestens ein Lipid pflanzlichen Ursprungs enthält, das aus gesättigten Fetten mit einem unter 75°C liegenden Schmelzpunkt ausgewählt wird, zur Herstellung eines Nahrungsmittelprodukts nach einem der Ansprüche 1 bis 8.

## Revendications

1. Produit alimentaire comprenant une matrice alimentaire à base d'un substitut de beurre de cacao,
dans lequel ladite matrice alimentaire comprend des bactéries probiotiques enrobées d'une composition lipidique comprenant au moins un lipide d'origine végétale choisi parmi les graisses saturées ayant un point de fusion inférieur à 75 °C,
et **caractérisé en ce que** la quantité d'acides gras en C8 et/ou esters d'acides gras est comprise entre 3 % et 5 %, par rapport au poids total de la matrice alimentaire ; la quantité d'acides gras en C10 et/ou d'esters d'acides gras est comprise entre 3 % et 5 %, par rapport au poids total de la matrice alimentaire ; et la quantité d'acides gras en C12 et/ou esters d'acides gras est inférieure à 1 % par rapport au poids total de la matrice alimentaire.

2. Produit alimentaire comprenant une matrice alimentaire à base d'un substitut de beurre de cacao,
dans lequel ladite matrice alimentaire comprend des bactéries probiotiques enrobées d'une composition lipidique comprenant au moins un lipide d'origine végétale choisi parmi les graisses saturées ayant un point de fusion inférieur à 75 °C,
et **caractérisé en ce que** la quantité d'acides gras en C8 et/ou esters d'acides gras est inférieure à 3 % en poids, par rapport au poids total de la matrice alimentaire ; la quantité d'acides gras en C10 et/ou d'esters d'acides gras est inférieure à 3 % en poids, par rapport au poids total de la matrice alimentaire ; et la quantité d'acides gras en C12 et/ou esters d'acides gras est inférieure à 1 % par rapport au poids total de la matrice alimentaire.

3. Produit alimentaire selon la revendication 1 ou la revendication 2, dans lequel lesdites graisses saturées sont choisies dans le groupe comprenant les mono- et diglycérides d'acides gras saturés, les polyglycérols estérifiés avec des acides gras saturés et les acides gras saturés libres ; de préférence, lesdites graisses saturées sont choisies parmi le distéarate de polyglycéryle, le palmitostéarate de glycéryle et les graisses végétales hydrogénées d'origine non laurique ; de préférence, lesdites graisses saturées ont un point de fusion compris entre 45 °C et 65 °C.

4. Produit alimentaire selon la revendication 2, dans lequel ladite matrice alimentaire comprend moins de 5 % en poids ; de préférence en une quantité comprise entre 0,1 % et 3 % en poids d'acide gras en C8, C10 et C12 et/ou esters de ceux-ci.

5. Produit alimentaire selon l'une quelconque des revendications précédentes 1 à 4, dans lequel ledit acide gras en C8, C10 et C12 est choisi parmi l'acide caprilique, l'acide caprique, et l'acide laurique et ledit ester d'acide gras en C8, C10 et C12 comprend des mono-, di- ou triglycérides.

6. Produit alimentaire selon l'une quelconque des revendications précédentes 1 à 5, dans lequel la matrice alimentaire peut aussi comprendre au moins une fibre prébiotique choisie dans le groupe comprenant : inuline, fructo-oligosaccharides (FOS), galacto- et transgalacto-oligosaccharides (GOS et TOS), gluco-oligosaccharides (GOSα), xylo-oligosaccharides (XOS), quitosane-oligosaccharides (COS), soja-oligosaccharides (SOS), isomalto-oligosaccharides (IMOS), amidon résistant, pectine, psyllium, arabino-galactanes, gluco-mannanes, galacto-mannanes, xylanes, lactosaccharose, lactulose, lactitol, et divers autres types de caoutchoucs, fibre d'acacia, fibre de caroube, fibre d'avoine, fibre de bambou, fibres d'agrumes et fibres contenant une fraction soluble et une fraction insoluble, en des rapports variables les uns sur les autres.

7. Produit alimentaire selon l'une quelconque des revendications précédentes 1 à 6, dans lequel ladite matrice alimentaire est enrobée au moyen d'un enrobage extérieur, de préférence ledit enrobage est créé par une fabrication qui nécessite l'utilisation d'une solution aqueuse comprenant de la maltodextrine, de la gomme laque, de l'acétophtalate de cellulose, de l'amidon, de la zéine, du talc, du carbonate de calcium, du dioxyde de titane, du kaolin, du sucre, des solutions de sirop, du saccharose, des édulcorants, de la gomme arabique et/ou d'autres hydrates de carbone, de la cire de carnauba ou d'autres cires.

8. Produit alimentaire selon l'une quelconque des revendications 1 à 7, dans lequel la matrice alimentaire comprend une quantité en poids d'acide stéarique et d'acide palmitique supérieure à 80 %, par rapport au poids de la matrice.

9. Procédé de préparation d'un produit alimentaire selon l'une quelconque des revendications 1 à 8 comprenant au moins les étapes suivantes :
- l'addition des bactéries probiotiques enrobées avec une composition lipidique comprenant au moins un lipide d'origine végétale choisi parmi les graisses saturées ayant un point de fusion inférieur à 75 °C, à une matrice alimentaire à base d'un substitut de beurre de cacao fondu,
- le versement de ladite matrice alimentaire dans un logement dont les parois sont à une température plus basse que la température de ladite matrice alimentaire à base de substitut de beurre de cacao fondu, afin d'obtenir la solidification de ce dernier.

10. Utilisation de bactéries probiotiques enrobées avec une composition lipidique comprenant au moins un lipide d'origine végétale choisi parmi les graisses saturées ayant un point de fusion inférieur à 75 °C pour la préparation d'un produit alimentaire selon l'une quelconque des revendications 1 à 8.
